# EUROPÄISCHE PATENTSCHRIFT

(11) **EP 2 250 466 B1**
(45) Veröffentlichungstag und Bekanntmachung des Hinweises auf die Patenterteilung: **24.06.2015**
(21) Anmeldenummer: 09714682.3
(22) Anmeldetag: 23.02.2009
(51) Int. Cl.: G01D 5/14, G01B 7/02

(54) **LINEARSENSOR**
LINEAR SENSOR
CAPTEUR LINÉAIRE

(30) Priorität: 28.02.2008 DE 102008011615
(43) Veröffentlichungstag der Anmeldung: 17.11.2010
(73) Patentinhaber: BorgWarner Ludwigsburg GmbH, 71636 Ludwigsburg (DE)
(72) Erfinder: MARTO, Arno, 71263 Weil der Stadt (DE); LEOPOLD, Stefan, 74366 Kirchheim (DE); WAGNER, Klaus-Jürgen, 71723 Grossbottwar (DE); SCHRADER, Heiko, 71711 Kleinbottwar (DE)
(74) Vertreter: Twelmeier Mommer & Partner
(86) Internationale Anmeldenummer: PCT/DE2009/000238
(87) Internationale Veröffentlichungsnummer: WO 2009/106048

(56) Entgegenhaltungen:
- WO-A-01/01066
- DE-C1- 19 544 815
- DE-C1- 19 624 233
- DE-U1- 20 218 754
- GB-A- 349 213
- US-A- 3 604 115

## Beschreibung

Die Erfindung betrifft einen Linearsensor mit den im Oberbegriff des Anspruchs 1 angegebenen Merkmalen.

Derartige Linearsensoren kommen in der Kraftfahrzeugtechnik zum Einsatz, beispielsweise zur Steuerung von Bremskraftverstärkern, deren Aktivierung in Abhängigkeit von der Auslegung eines Bremspedals erfolgt. Mit zunehmender Pedalauslegung wird der Bremsdruck erhöht, der auf ein Steuerglied einwirkt, dessen Auslenkung mittels eines Linearsensors ermittelt werden kann. Ein weiteres Beispiel sind Ladedruckregler für Abgasturbolader. In der Regel wird bei derartigen Anwendungen der Stift des Linearsensors durch Federkraft gegen ein bewegliches Messobjekt, beispielsweise ein Steuerglied, gedrückt, so dass der Stift stets an dem Messobjekt anliegt und dessen Bewegung folgt.

Aus der WO 01/01066 A1 und der DE 196 24 233 C1 sind Linearsensoren der eingangs genannten Art bekannt, bei denen ein linear verschiebbarer Stift mit einer in dem Sensor enthaltenen Schraubenfeder aus dem Sensor herausgedrückt wird. Das aus dem Sensor herausragende Ende des Stiftes liegt an dem Messobjekt an und wird durch die Vorspannkraft der Schraubenfeder gegen das Messobjekt gedrückt. Bei Schwingungen oder Vibrationen des Messobjekts kann der Kontakt des Messobjektes zu dem Stift kurzzeitig verloren gehen, so dass der Sensor ein falsches Signal liefert. Der aus der DE 196 24 233 C1 bekannte Linearsensor, bei dem ein quaderförmiger Permanentmagnet relativ zu einem ortsfest an einem Gehäuse angeordneten Magnetfeldsensor bewegt wird, ist für Anwendungen in der Kraftfahrzeugtechnik jedoch weniger geeignet, da der auf Erschütterung, die sich beispielsweise durch Motorbetrieb ergeben können, empfindlich reagiert, verschleißanfällig ist und einen hohen Herstellungsaufwand sowie häufige Justierungen erfordert.

Die DE 197 51 519 C2 beschreibt einen Linearsensor, zum Beispiel bei der Steuerung eines Bremskraftverstärkers zur Erzeugung eines elektrischen Steuersignals in Abhängigkeit von der Relativposition zweier relativ zueinander verschiebbaren Teile, wobei der Linearsensor einen Magneten aufweist, dem mindestens ein Hallsensor zugeordnet ist, wobei der Magnet und der Hallsensor relativ zueinander verschieblich gehalten sind und der Hallsensor einen von seinen Position relativ zum Magneten abhängiges elektrisches Spannungssignal liefert, wobei der Magnet unverschieblich in einem Gehäuse des Linearsensors festgelegt ist und der Hallsensor relativ zum Magneten im Gehäuse verschiebbar ist.

In der DE 202 18 754 U1 ist eine Messvorrichtung zur Wegbestimmung an einem Linearantrieb, der als Zylinder mit Kolben und Schubstange ausgebildet ist, offenbart. Auf der Schubstange ist ein Magnethalter aufgerastet, an dessen Enden jeweils ein Permanentmagnet angeordnet ist. Bei einer Verschiebung des Kolbens verschiebt sich auch der an der Kolbenstange befestigte Magnethalter in axialer Richtung. Im Schiebebereich des Magnethalters ist ein Sensor gehäusefest an dem Zylinder angeordnet, wobei an dem Magnethalter eine über die gesamte Länge angeformte Gleitschiene vorgesehen ist, um bei der Verschiebung des Magnethalters eine verdrehsichere Führung des Magnethalters zu gewährleisten.

In der GB 349 213 A ist ein rechteckiger Zylinder offenbart, in welchem ein rechteckiger Kolben arbeitet. In der DE 195 44 815 C1 ist ein Sensor mit einer auf einem Träger angeordneten elektrischen Schaltung offenbart, bei dem ein Sensorelement und ein erster Teil des Trägers mit der elektrischen Schaltung in eine Duroplast-Formmasse eingebettet sind. In dem US-Patent 3,604,115 ist ein Werkzeug zum Abisolieren von isolierten Kabeln offenbart, welches durch Spritzgießen unter Verwendung von Kunststoff oder anderen spritzgießbaren selbstschmierenden Materialien hergestellt werden kann, welche Grafit oder andere schmierende Zusätze enthalten.

Aufgabe der Erfindung ist es deshalb, einen Weg aufzuzeigen, wie ein für die Kraftfahrzeugtechnik geeigneter Linearsensor geschaffen werden kann, der sich kostengünstig herstellen lässt und auch bei im Fahrbetrieb auftretenden Erschütterungen präzise Messungen ermöglicht.

Diese Aufgabe wird durch einen Linearsensor mit den im Anspruch 1 angegebenen Merkmalen gelöst. Vorteilhafte Weiterbildungen der Erfindung sind Gegenstand der abhängigen Ansprüche.

Bei einem erfindungsgemäßen Linearsensor wird mit einfachsten Mitteln eine hochpräzise Führung der Stifts erreicht, bevorzugt indem eine Verengung der Hülse eine Führung bildet.

Zu Messfehlern führende Querbewegungen des Stifts können bei einem erfindungsgemäßen Linearsensor weitestgehend ausgeschlossen werden. Selbst bei Vibrationen, die beispielsweise durch Motorbetrieb entstehen können, kann deshalb mit einem erfindungsgemäßen Linearsensor die Position eines Messobjekts präzise festgestellt werden.

Indem sich der Stift und die Hülse nur an der Führung berühren, ergibt sich Vorteilhafterweise eine kleine Reibungsfläche. Mit kleinen Reibungsflächen sind nur geringe Reibungskräfte verbunden, so dass ein verschleißarmer Betrieb und eine hohe Langzeitstabilität möglich sind.

Bevorzugt ist der Magnetfeldsensor an einem die Verengung bildenden Abschnitt der Hülse befestigt. Diese Maßnahme hat den Vorteil, dass selbst bei motorbedingten Vibrationen der Abstand zwischen dem Magnetsensor und dem Stift, senkrecht zur Bewegungsrichtung des Stifts gemessen, konstant bleibt und deshalb stets mit hoher Genauigkeit gemessen werden kann.

Der Stift hat bevorzugt einen kreisförmigen Querschnitt, was die Fertigung vereinfacht und für eine geringere Reibung günstig ist. Besonders bevorzugt ist der Stift in der Hülse um seine Längsachse drehbar. Im Betrieb eines Fahrzeugs können Vibrationen oder Bewegungen des Messobjekts dazu führen, dass auf den Stift ein Drehmoment ausgeübt wird. Indem der Stift drehbar ist, können derartige Drehmomente relaxieren ohne die Führung des Stifts zu belasten.

Eine vorteilhafte Weiterbildung der Erfindung sieht vor, dass der Stift und/oder die Hülse aus einem Grafitpartikel enthaltenden Kunststoff gefertigt sind. Eine im Betrieb unvermeidlicherweise auftretender Abrieb sorgt auf diese Weise durch das Freisetzen von Grafitpartikeln für eine andauernde Zufuhr an Gleitmitteln. Selbst nach lang andauerndem Betrieb sind auf diese Weise stets geringe Reibungskräfte gewährleistet, so dass ein entsprechender ausgebildeter Linearsensor über sehr lange Zeiten stabil betrieben werden kann. Besonders bevorzugt ist dabei, dass der Stift aus einem Grafitpartikel enthaltenden Kunststoff gefertigt ist, insbesondere, dass die Hülse aus einem grafitpartikelfreien Kunststoff gefertigt ist.

Eine weitere vorteilhafte Weiterbildung der Erfindung sieht vor, dass die Hülse und der Stift, abgesehen von einem eventuellen Grafitpartikelzusatz aus dem selben Kunststoff sind. Auf diese Weise wird erreicht, dass die thermischen Ausdehnungskoeffizienten von Hülse und Stift übereinstimmen und sich deshalb über einen sehr großen Temperaturbereich eine gleich bleibende präzise Führung ergibt. Als Material für die Hülse und den Stift sind Duroplaste bevorzugt.

Eine weitere vorteilhafte Weiterbildung der Erfindung sieht vor, dass der Stift an seinem aus der Hülse herausragenden Ende abgerundet ist. Diese Maßnahme hat den Vorteil, dass beim Andrücken des Stifts an ein Messobjekt die Gefahr eines Kippens des Messobjekts, welche die Messgenauigkeit beeinträchtigen könnte, reduziert ist.

Eine andere vorteilhafte Weiterbildung der Erfindung sieht vor, dass der Magnethalter kuppelartig ausgestaltet ist. Hierbei ist von Vorteil, dass bei auftretenden Schwingungen der Magnethalter radiale Bewegungen definiert zulässt und so einen Bruch des Systems verhindert.

Die Erfindung sieht vor, dass der Magnethalter wenigstens drei Federelemente aufweist. Durch entsprechende Auslegung der Federkonstante der jeweiligen Feder lässt sich im, mit Eigenschwingungen behafteten Kraftfahrzeug die Toleranz insbesondere der radialen Beweglichkeit des Magnetgehäuses bzw. des Stiftes exakt definieren.

Eine weitere vorteilhafte Weiterbildung der Erfindung sieht vor, dass der Magnet- bzw. Stifthalter aus Kunststoff und/oder Metall besteht. Vorteilhafter Weise kann man zum Beispiel das im Magnethalter integrierte ringförmige Element aus Kunststoff vorsehen, den kuppelartigen Teil bzw. die Federelemente des Magnethalters fügt man jedoch aus Metall hinzu, so dass man ein gedämpftes Federmassesystem erhält, das durch geeignete Auslegung den Einfluss von Resonanzen auf das Messergebnis minimiert, bei gleichzeitig hoher Betriebssicherheit, da ein Systemversagen durch die insbesondere radiale Neigung zum Ausgleich unterbleibt. Weiterhin gewährleistet die starre Verbindung zwischen Messobjekt und Magnethalter sowie die quasi starre Verbindung zwischen Magnethalter und Magnetgehäuse, dass der gemessene Weg auch den tatsächlichen Weg des Messobjekts entspricht.

Bevorzugt hat der Stift an seinem aus der Hülse herausragenden Ende eine Stirnfläche, deren Durchmesser 20 % bis 60 % des Innendurchmessers der Hülse an der Verengung beträgt. Eine gegenüber dem Stiftdurchmesser reduzierte Stirnfläche bewirkt, dass bei einem eventuellen Kippen des Messobjekts die Übertragung von Querkräften reduziert wird. Die Führung des Stifts in der Hülse wird deshalb weniger belastet und für die Messgenauigkeit schädliche Querbewegungen können leichter vermieden werden. Eine Stirnfläche, deren Durchmesser 20 % bis 60 % des Durchmessers eines in der Hülse gelagerten zylindrischen Stiftabschnitts beträgt, ist andererseits groß genug, um die Flächenlast der an dem Messobjekt anliegenden Berührungsfläche auf ein für einen verschleißarmen Betrieb geeignetes Maß zu begrenzen.

Weitere Einzelheiten und Vorteile der Erfindung werden an einem Ausführungsbeispiel unter Bezugnahme auf die beigefügten Figuren erläutert. Die dabei beschriebenen Merkmale können einzeln und in Kombination zum Gegenstand von Ansprüchen gemacht werden.
- Figur 1:: Ausführungsbeispiel eines Linearsensors in einem Längsschnitt.
- Figur 2:: Linearsensor mit kuppelartigem Magnethalter

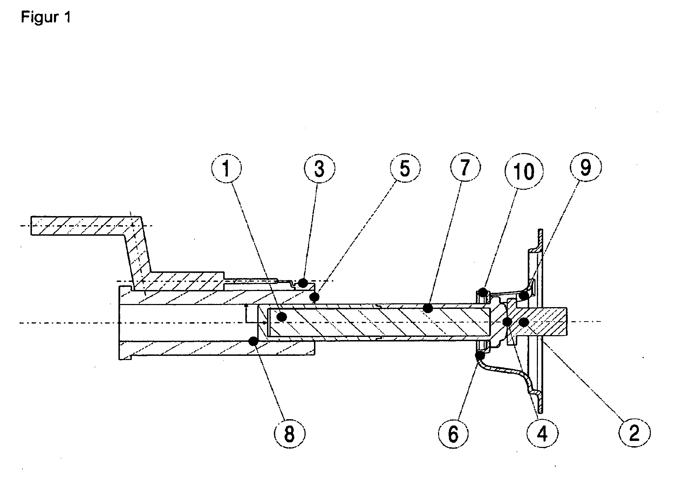

Figur 1 zeigt einen Linearsensor mit einer Hülse 5, in der ein zylindrischer Stift 7 linear verschiebbar angeordnet ist. Der Stift 7 enthält einen Permanentmagneten 1, der bevorzugt ein Stabmagnet ist, und liegt bestimmungsgemäß mit seinem aus der Hülse 5 herausragenden Ende 4 an einem Messobjekt 2 an.

An der Hülse 5 ist ein Magnetfeldsensor 3, bevorzugt ein Hallsensor, befestigt. Eine Verschiebung des Stifts 7 mit dem darin enthaltenden Permanentmagneten 1 bewirkt eine Änderung des Magnetfelds am Ort des Magnetfeldsensors 3. Durch eine Auswertung dieser Änderung kann die Position des Permanentmagneten 1 und damit des Messobjekts 2 ermittelt werden.

Der Stift 7 und die Hülse 5 berühren sich im Bereich der Führungsfläche jeweils flächig, was die Präzision der axialen und radialen Führung weiter erhöht. Es ist vorteilhaft, den Magnetfeldsensor 3 an dem die Verengung ausbildenden Abschnitt der Hülse 5 zu befestigen, da dort der Abstand des Stifts 7 von dem Magnetfeldsensor 3 senkrecht zur Bewegungsrichtung des Stifts 7 auch bei Auftreten von Vibrationen mit der Größengenauigkeit konstant bleibt.

Der Stift 7 ist an seinem aus der Hülse 5 herausragenden Ende 4 abgerundet und hat dort eine eben Stirnfläche, deren Durchmesser bei dem dargestellten Ausführungsbeispiel 50 % des Innendurchmessers der Hülse 5 an ihrer Verengung beträgt. Durch diese geometrische Gestaltung wird einerseits eine genügend große Berührungsfläche für eine geringe Flächenlast und somit einen verschleißarmen Betrieb erreicht. Andererseits wird durch eine reduzierte Auflagefläche die Reibung minimiert und die Übertragung von Querkräften bei einem eventuellen Kippen des Messobjekts 2 verhindert. Allgemein ist es günstig, wenn die Stirnfläche einen Durchmesser von etwa 20 % bis 60 % des Innendurchmessers der Hülse 5 an der Verengung hat.

Der Stift 7 ist durch Umspritzen des Permanentmagneten 1 mit einem Duroplast gefertigt. Die Hülse 5 ist ebenfalls aus einem Duroplast hergestellt, vorzugsweise aus demselben Duroplast. Auf diese Weise haben der Stift 7 und die Hülse 5 ähnliche Wärmeausdehnungskoeffizienten, so dass es in einem großen Temperaturbereich im Bereich der Führungsfläche 8 weder zu einem klemmen noch zu einem Spiel kommt. Der dargestellte Linearsensor kann deshalb insbesondere auch im Motorraum eines Kraftfahrzeuges eingebaut werden und sich im Betrieb auf bis zu 170 ° C ohne Beeinträchtigung erwärmen.

Zur Verbessung der Gleiteigenschaften ist es vorteilhaft, für den Stift 7 einen Duroplast mit einem Grafitpartikelzusatz zu verwenden. Die zugesetzten Grafitpartikel reduzieren die Härte des Duroplasts. Ein im Betrieb unvermeidlicher Abrieb tritt auf diese Weise praktisch ausschließlich an dem Stift 7, nicht jedoch an der Hülse 5 auf. Da der Abrieb eine Grafitfüllung beinhaltet, wirkt der Abriebstaub als Gleitmittel in den Führungsflächen 8. Dieser Vorteil lässt sich auch nutzen, indem anstelle des Stifts 7 oder zusätzlich zu dem Stift 7 die Hülse 5 aus grafitpartikelhaltigem Kunststoff hergestellt wird.

Besonders vorteilhaft ist es jedoch, wenn der Duroplast des Stifts 7 Grafitpartikel enthält. Ein an der Stirnfläche 4 auftretender Abrieb wird dann nämlich zu einer Reibungsreduktion und damit zur Verminderung von Querkräften, die bei einem Kippen des Messobjekts 2 auftreten können. Prinzipiell ist es auch möglich, sowohl die Hülse 5 als auch für den Stift 7 grafitpartikelhaltigen Kunststoff zu verwenden. Dies ist jedoch wegen des erhöhten Abriebs nicht bevorzugt.

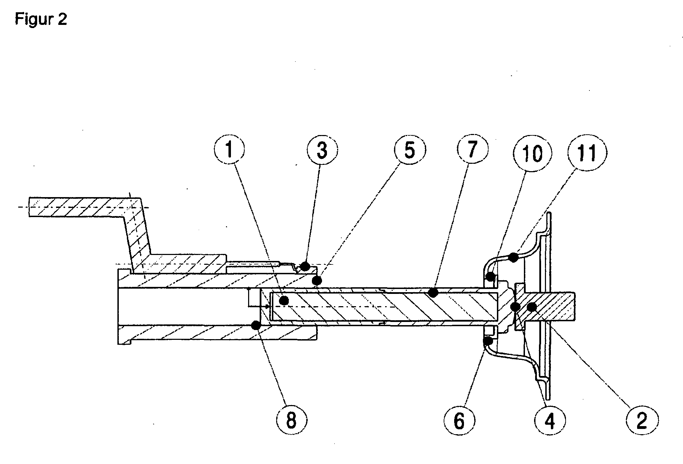

In Figur 2 wird ein Linearsensor mit einer Hülse 5 gezeigt, in der ein zylindrischer Stift 7 linear verschiebbar angeordnet ist. Der Stift 7 enthält einen Permanentmagneten 1 und liegt mit seinem aus der Hülse 5 herausragenden Ende 4 an einem Messobjekt an. An der Hülse 5 ist ein Hallsensor 3 befestigt. Eine Verschiebung des Stifts 7 bewirkt eine Änderung des Magnetfeldes im Bereich des Sensors 3.

Durch eine Auswertung dieser Änderung kann die Position des Magneten 1 und somit auch des Messobjekts 2 ermittelt werden. Im Unterschied zum Ausführungsbeispiel in Figur 1 weist der Magnethalter 6 im Ausführungsbeispiel nach Figur 2 einen kuppelartigen Bereich 11 auf.

### Bezugszeichenliste:

1. Magnet
2. Messobjekt
3. Magnetfeld- oder Hallsensor
4. Kontaktfläche des Sensors zum Messobjekt / Ende
5. Führung oder Hülse
6. Magnethalter
7. Magnetgehäuse / Stift
8. Führungsfläche
9. Federelement
10. Ringförmiges Element
11. Kuppelartiger Bereich des Magnethalters

## Patentansprüche

1. Linearsensor mit einer Hülse (5), mit einem Stift (7), der einen Permanentmagneten (1) enthält und in der Hülse (5) linear verschiebbar gelagert ist, und einem an der Hülse (5) befestigten Magnetfeldsensor (3) zum Detektieren einer Verschiebung des Permanentmagneten (1), wobei der Stift (7) mit einer im wesentlichen zylindrischen Führung (8) geführt ist, **dadurch gekennzeichnet, dass** der Stift (7) einen Magnethalter bzw. Stifthalter (6) aufweist, dass der Magnet- bzw. Stifthalter (6) starr mit einem Messobjekt (2) verbindbar ist und wenigstens drei Federelemente (9) aufweist, dass die Federelemente an ihrer dem Magnetfeldsensor (3) zugewandten Seite an einem im wesentlichen ringförmigen Element (10) angeordnet sind, und dass der Stift (7) an seinem dem Magnetfeldsensor (3) abgewandten Ende (4) eine Verdickung aufweist, mit welcher das Ende (4) am ringförmigen Element (10) anliegt.

2. Linearsensor nach Anspruch 1, **dadurch gekennzeichnet, dass** die Führung (8) des Stifts (7) durch eine Verengung der Hülse (5) gebildet ist, an welcher der Stift (7) die Hülse (5) berührt.

3. Linearsensor nach einem der vorstehenden Ansprüche, **dadurch gekennzeichnet, dass** der Stift (7) und/oder die Hülse (5) aus einem Graphitparükel enthaltenden Kunststoff gefertigt sind.

4. Linearsensor nach einem der vorstehenden Ansprüche, **dadurch gekennzeichnet, dass** die Hülse (5) und/oder der Stift (7) aus einem Duroplast bestehen.

5. Linearsensor nach Anspruch 4, **dadurch gekennzeichnet, dass** die Hülse (5) und der Stift (7), abgesehen von einem eventuellen Graphitpartikelzusatz, aus dem selben Duroplast sind.

6. Linearsensor nach einem der vorstehenden Ansprüche, **dadurch gekennzeichnet, dass** der Stift (7) durch Umspritzen des Permanentmagneten (1) hergestellt ist.

7. Linearsensor nach einem der vorstehenden Ansprüche, **dadurch gekennzeichnet, dass** der Stift (7) an seinem aus der Hülse (5) herausragenden Ende (4) abgerundet ist.

8. Linearsensor nach einem der vorstehenden Ansprüche, **dadurch gekennzeichnet, dass** der Stift (7) an seinem aus der Hülse (5) herausragenden Ende (4) eine Stirnfläche hat, deren Durchmesser 20 % bis 60 % des Innendurchmessers der Hülse (5) an der Verengung beträgt.

9. Linearsensor nach einem der vorstehenden Ansprüche, **dadurch gekennzeichnet, dass** der Magnetfeldsensor (3) an einem die Verengung bildenden Abschnitt der Hülse (5) befestigt ist.

10. Linearsensor nach einem der vorstehenden Ansprüche, **dadurch gekennzeichnet, dass** der Stift (7) in der Hülse (5) drehbar ist.

11. Linearsensor nach einem der vorstehenden Ansprüche, **dadurch gekennzeichnet, dass** der Stift (7) einen kreisförmigen Querschnitt hat.

12. Linearsensor nach einem der vorstehenden Ansprüche, **dadurch gekennzeichnet, dass** sich der Stift (7) und die Hülse (5) nur an der Führung (8) berühren.

13. Linearsensor nach einem der vorstehenden Ansprüche, **dadurch gekennzeichnet, dass** der Stift (7) sich durch das ringförmige Element (10) erstreckt.

14. Linearsensor nach einem der vorstehenden Ansprüche, **dadurch gekennzeichnet, dass** das ringförmige Element (10) aus Kunststoff besteht.

## Claims

1. A linear sensor comprising a sleeve (5), a pin (7), which contains a permanent magnet (1) and is linearly displaceably supported in the sleeve (5), and a magnetic field sensor (3), which is fastened on the sleeve (5) and is used to detect a displacement of the permanent magnet (1), wherein the pin (7) is guided with a substantially cylindrical guide (8), **characterized in that** the pin (7) comprises a magnet holder or a pin holder (6), the magnet holder or pin holder (6) is rigidly connectable to a measurement object (2) and has at least three spring elements (9), the spring elements are disposed, on the side thereof facing the magnetic field sensor (3), on a substantially annular element (10), and the pin (7) has a thickening on the end (4) thereof facing away from the magnetic field sensor (3), by means of which the end (4) rests against the annular element (10).

2. The linear sensor according to claim 1, **characterized in that** the guide (8) of the pin (7) is formed by a constriction of the sleeve (5) on which the pin (7) comes in contact with the sleeve (5).

3. The linear sensor according to any one of the preceding claims, **characterized in that** the pin (7) and/or the sleeve (5) are made of a graphite particle-containing plastic.

4. The linear sensor according to any one of the preceding claims, **characterized in that** the sleeve (5) and/or the pin (7) is made of a thermoset material.

5. The linear sensor according to claim 4, **characterized in that** the sleeve (5) and the pin (7) are made of the same thermoset material, apart from potentially added graphite particles.

6. The linear sensor according to any one of the preceding claims, **characterized in that** the pin (7) is produced by insert molding the permanent magnet (1).

7. The linear sensor according to any one of the preceding claims, **characterized in that** the pin (7) is rounded off at the end (4) thereof protruding from the sleeve (5).

8. The linear sensor according to any one of the preceding claims, **characterized in that** at the end (4) protruding from the sleeve (5), the pin (7) has a face, the diameter of which is 20% to 60% of the inside diameter of the sleeve (5) at the constriction.

9. The linear sensor according to any one of the preceding claims, **characterized in that** the magnetic field sensor (3) is attached to a section of the sleeve (5) forming the constriction.

10. The linear sensor according to any one of the preceding claims, **characterized in that** the pin (7) can be rotated in the sleeve (5).

11. The linear sensor according to any one of the preceding claims, **characterized in that** the pin (7) has a circular cross section.

12. The linear sensor according to any one of the preceding claims, **characterized in that** the pin (7) and the sleeve (5) touch each other only at the guide (8).

13. The linear sensor according to any one of the preceding claims, **characterized in that** the pin (7) extends through the annular element (10).

14. The linear sensor according to any one of the preceding claims, **characterized in that** the annular element (10) is made of plastic.

## Revendications

1. Capteur linéaire avec un manchon (5), avec une tige (7) contenant un aimant permanent (1) tout en étant agencé de façon linéairement déplaçable dans le manchon (5), et un capteur de champ magnétique (3) fixé au manchon (5) pour la détection d'un déplacement de l'aimant permanent (1), dans lequel la tige (7) est guidée à l'aide d'un guidage (8) essentiellement cylindrique, **caractérisé en ce que** la tige (7) comporte un support d'aimant ou un support de tige (6), **en ce que** le support d'aimant ou de tige (6) peut être relié fixement à un objet à mesurer (6) et comporte au moins trois éléments à ressort (9), **en ce que** les éléments à ressort sont agencés sur un élément essentiellement annulaire (10) par leur côté tourné vers le capteur de champ magnétique (3), et **en ce que** la tige (7) comporte un épaississement à son extrémité (4) détournée du capteur de champ magnétique (3), permettant d'appliquer l'extrémité (4) sur l'élément annulaire (10).

2. Capteur linéaire selon la revendication 1, **caractérisé en ce que** le guidage (8) de la tige (7) est formé par un rétrécissement du manchon (5), au niveau duquel la tige (7) touche le manchon (5).

3. Capteur linéaire selon l'une des revendications précédentes, **caractérisé en ce que** la tige (7) et/ou le manchon (5) est/sont constitué(s) d'un plastique contenant des particules de graphite.

4. Capteur linéaire selon l'une des revendications précédentes, **caractérisé en ce que** le manchon (5) et/ou la tige (7) est/sont constitué(s) d'un plastique thermodurci.

5. Capteur linéaire selon la revendication 4, **caractérisé en ce que** le manchon (5) et la tige (7) sont constitués du même plastique thermodurci, mis à part un éventuel ajout de particules de graphite.

6. Capteur linéaire selon l'une des revendications précédentes, **caractérisé en ce que** la tige (7) est réalisée par surmoulage de l'aimant permanent (1).

7. Capteur linéaire selon l'une des revendications précédentes, **caractérisé en ce que** la tige (7) est arrondie à son extrémité (4) faisant saillie hors du manchon (5).

8. Capteur linéaire selon l'une des revendications précédentes, **caractérisé en ce qu'**à son extrémité (4) faisant saillie hors du manchon (5), la tige (7) présente une face frontale dont la diamètre mesure entre 20% et 60% du diamètre intérieur du manchon (5) au niveau du rétrécissement.

9. Capteur linéaire selon l'une des revendications précédentes, **caractérisé en ce que** le capteur de champ magnétique (3) est fixé à une section du manchon (5) formant le rétrécissement.

10. Capteur linéaire selon l'une des revendications précédentes, **caractérisé en ce que** la tige (7) est rotative dans le manchon (5).

11. Capteur linéaire selon l'une des revendications précédentes, **caractérisé en ce que** la tige (7) présente une section transversale circulaire.

12. Capteur linéaire selon l'une des revendications précédentes, **caractérisé en ce que** la tige (7) et le manchon (5) se touchent uniquement au niveau du guidage (8).

13. Capteur linéaire selon l'une des revendications précédentes, **caractérisé en ce que** la tige (7) s'étend à travers l'élément annulaire (10).

14. Capteur linéaire selon l'une des revendications précédentes, **caractérisé en ce que** l'élément annulaire (10) est constitué de plastique.
